# EUROPEAN PATENT SPECIFICATION

(11) **EP 1 381 881 B1**
(45) Date of publication and mention of the grant of the patent: **09.08.2006**
(21) Application number: 02725632.0
(22) Date of filing: 12.04.2002
(51) Int. Cl.: G01S 7/41, G01S 7/48, G01V 8/20

(54) **SYSTEM AND METHOD FOR OPTICALLY SENSING MOTION OF OBJECTS**
VORRICHTUNG UND VERFAHREN ZUR OPTISCHEN ERFASSUNG DER BEWEGUNG VON OBJEKTEN
SYSTEME ET PROCEDE DE DETECTION OPTIQUE DU MOUVEMENT D'OBJETS

(30) Priority: 12.04.2001 US 834243
(43) Date of publication of application: 21.01.2004
(73) Proprietor: Honeywell International Inc., Morristown, New Jersey 07960 (US)
(72) Inventor: TATUM, Jimmy, A., Plano, TX 75025 (US); GUENTER, James, K., Garland, TX 75044 (US)
(74) Representative: Haley, Stephen
(86) International application number: PCT/US2002/011466
(87) International publication number: WO 2002/084325

(56) References cited:
- WO-A-88/00745
- DE-A- 4 404 483
- US-A- 5 266 810
- US-A- 5 635 724
- US-A- 5 793 485
- US-A- 5 835 613

## Description

### TECHNICAL FIELD

The present invention relates generally to the field of sensing. More specifically, the present invention relates generally to multiple laser optical sensing systems and methods. The present invention further relates to motion detection systems and methods.

### BACKGROUND OF THE INVENTION

Previous approaches to addressing sensing needs have generally involved using a single light signal from a light source, such as a light emitting diode, and multiple detectors. In order to illuminate a large area in an environment using a single light source, two general methods are known. One approach typically involves emitting a broad light signal from the light source and detecting the signal with one of multiple detectors positioned throughout the environment. The other approach typically involves emitting a narrow light signal from the light source, spreading the signal around the environment by reflecting it off of a rotating mirror, for instance, and detecting the signal with one of multiple detectors positioned throughout the environment. While feasible, both approaches typically require multiple detectors and are usually not power efficient as a result, yielding a low signal-to-noise ratio. A poor power-transfer ratio reflects this inefficiency as the individual detector that receives a light signal usually detects only a portion of the signal that was originally emitted. Consequently, the signal that was detected generally provides only limited information about a target being sensed in the environment. These approaches also tend to limit the size range of the target being sensed in an environment due to the nature of the single light signal.

The limitations of these previous approaches are often manifested in applications such as detecting the motion of a target in an environment. Many motion detection systems generally involve a line-of-sight operation, where at least one detector detects the motion of a target as the target breaks a beam of light emitted from a light source. In relatively simple applications, such as determining the presence or absence of a target, this approach generally suffices. For more complex applications, such as determining the direction of the target's motion, this approach proves less adequate. When a target moves across a single light signal emitted by a light source, the signal received by a detector gradually decreases as the signal blocked by the target gradually increases. This gradual change in signal detection typically requires a complex algorithm to determine the position of the target in the environment. Adding multiple detectors can provide more information and decrease the complexity of the algorithm required, though introduces power inefficiencies as mentioned previously, as well as added cost associated with additional hardware.

The limitations of the aforementioned approaches also relate to applications involving target recognition. Many known systems, either for recognizing only specific targets or for mapping spatial characteristics of targets, involve spreading a light signal with a rotating mirror and/or using multiple detectors. Holograms can also be used to spread the light signal by dividing the signal into smaller light signals. An approach for detecting only specific targets involves emitting pulses of signals from a transceiver, receiving the signals that reflect off of a target, and comparing the received signals with preset signals reflected off of known targets. Information about the known objects is typically stored in a database. An approach for mapping a target involves superimposing light signals received by different detectors in the presence of a target and comparing the signals with respect to signals associated with the environment without the target.

While each of these approaches is feasible for a particular function, none is known to perform several functions. This deficit creates a need for a versatile system that is both power efficient and cost effective. Such a system could be capable of, for instance, detecting the presence or absence of any target or of a specific target, detecting the spatial characteristics of a target, detecting the motion of any target or a specific target, or detecting various characteristics about the motion of a target.

US-A-5835613 discloses an optical identification and monitoring system using pattern recognition for use with vehicles.

WO-A-8800745 discloses a detection system.

US-A-5793485 discloses a resonant-cavity apparatus for cytometry or particle analysis.

US-A-5635724 discloses a method and apparatus for detecting the location of an object on a surface.

According to an aspect of the invention, there is provided an optical sensing system for detecting target motion within a known environment, which comprises:
a laser source adapted for operation by illumination through at least two emission apertures of an at least 2 aperture-by-at least 2 aperture array, wherein said illumination through said at least two emission apertures thereby creates at least two laser signals;
at least one detector operationally responsive to the laser signals;
a microprocessor operationally coupled to said at least one detector; and
a motion analysis module for determining motion characteristics of a target detected within said environment, wherein said laser source emits said at least two laser signals into an environment occupied by a target, said at least one detector detects changes in said at least two laser signals after said signals pass through said environment and interfere with a detected target, and said microprocessor determines target characteristics based on said signals received by said detector and input from said motion analysis module.

An embodiment of the present invention provides a laser-based sensing system that can be used in an environment to detect the motion of only "key"-shaped objects, ignoring others that can move about through a monitored environment. Different signals will reach a detector depending on the shape of particular targets present within the environment. The difference subsequently could allow for recognition of a specified target when a specified "match" is made.

An embodiment of the present invention also includes a trainable multiple laser optical sensing system for detecting target characteristics using said laser source.

The system can include a vertical cavity surface emitting laser structure with said at least two emission apertures being defined by photolithography.

The system can include a memory for storing target data and a training module for allowing the system to be trained to recognize targets. The microprocessor can then determine target characteristics based on laser signals received by the detector(s) and comparison with known target data stored in memory. Within the same vertical cavity surface emitting laser structure, the laser signals emitted can be identical or not identical. Optics can also be added to the system, such that laser signals pass through at least one lens or reflect off of a mirror or mirrors after exiting the emission apertures.

According to a further aspect of the invention, there is provided a method for detecting the motion of an object detected within a monitored environment, including the steps of:
emitting light into a monitored environment from a laser source adapted for operation by illumination of the light through at least two emission apertures of an at least 2 aperture-by-at least 2 aperture array, wherein said illumination through said at least two emission apertures thereby creates at least two laser signals and wherein said at least two laser signals are emitted into the monitored environment from a vertical cavity surface emitting laser structure statically, and wherein at least one target entering into the environment can block at least one of said laser signals;
transmissively receiving any of said laser signals not blocked by said target; and
determining target motion by comparing characteristics of said laser signals emitted by said vertical cavity surface emitting laser structure with characteristics of received laser signals.

Embodiments of the present invention provide methods for detecting target characteristics transmissively or reflectively using a vertical cavity surface-emitting laser.

In a transmissive method, a vertical cavity surface emitting laser structure can statically emit at least two laser signals into an environment, which may be occupied by a target. The target in motion can block at least one of the laser signals as it is passing through the environment, and at least one detector can transmissively receive any of the signals not blocked by the target. A microprocessor can then determine target characteristics by comparing characteristics of the laser signals emitted by the vertical cavity surface emitting laser structure with characteristics of the signals received by the detector(s).

In a reflective method, a vertical cavity surface emitting laser structure can serially emit at least one laser signal at a time into an environment, which may be occupied by a target in motion. At least one of the laser signals can reflect off of the target and can be detected by at least one detector. A microprocessor can then determine target characteristics by comparing temporal characteristics of the laser signals emitted by the vertical cavity surface emitting laser structure with temporal characteristics of the signals received by the detector(s).

In any method taught by the present invention or an embodiment thereof, or a microprocessor could determine the motion of a target based on attributes such as its size or shape and/or by determining which laser signals are received by a detector after different arrays of laser signals are emitted by a vertical cavity surface emitting laser structure. The microprocessor could also detect motion of the target in an environment by detecting changes in the array of laser signals that are blocked or reflected off of the target.

### BRIEF DESCRIPTION OF THE DRAWINGS

The accompanying figures, in which like reference numerals refer to identical or functionally-similar elements throughout the separate views and which are incorporated in and form part of the specification, further illustrate the present invention and, together with the detailed description of the invention, serve to explain the principles of the present invention.
- FIG. 1: illustrates a diagram of a vertical cavity surface emitting laser structure;
- FIG. 2: illustrates diagrams of a vertical cavity surface emitting laser structure emitting two different patterns of light signals 2(a) and 2(b);
- FIG. 3: illustrates a diagram of a target blocking a light signal statically emitted from a vertical cavity surface emitting laser structure before it reaches a detector;
- FIG. 4: illustrates diagrams of a vertical cavity surface emitting laser structure cycling through different emission patterns of light signals to determine a map of the target. In 4(a) light signals forming a vertical line are blocked by a vertical bar-shaped target and none reach a detector. When a different pattern of signals is emitted as in 4(b), forming a right angle, one signal reaches the detector. In the presence of a right angle-shaped target as in 4(c), however, the same right angle-shaped pattern as emitted in 4(b) would be blocked;
- FIG. 5: illustrates diagrams of a vertical cavity surface emitting laser structure emitting the same pattern of light signals in 5(a) and 5(b). In 5(a) a target blocks all emitted signals, whereas in 5(b) a different target does not block all signals, allowing recognition of a specified target only;
- FIG. 6: illustrates diagrams of emitted light signals passing through 6(a) a single lens producing a magnified image of the emitted array and 6(b) a compound lens system producing an expanded version of the emitted array;
- FIG. 7: illustrates diagrams of emitted light signals passing through arrays of lenses. The array of lenses in 7(a) expands the diameter of light signals without changing their center spacing. The array of lenses in 7(b) expands the diameter and changes the direction of emitted light signals;
- FIG. 8: illustrates a diagram of a target blocking a light signal serially emitted from a vertical cavity surface emitting laser structure before it reaches a detector;
- FIG. 9: illustrates how a lens can be used to spread light signals emitted by a vertical cavity surface emitting laser structure into an environment occupied by a target, wherein an emitted signal reflects off of the target and reaches the detector;
- FIG. 10: illustrates a system for the present invention; and
- FIG.11: illustrates a flow chart of a method for the present invention.

### DETAILED DESCRIPTION OF THE INVENTION

The particular values and configurations discussed in these non-limiting examples can be varied and are cited merely to illustrate an embodiment of the present invention and are not intended to limit the scope of the invention.

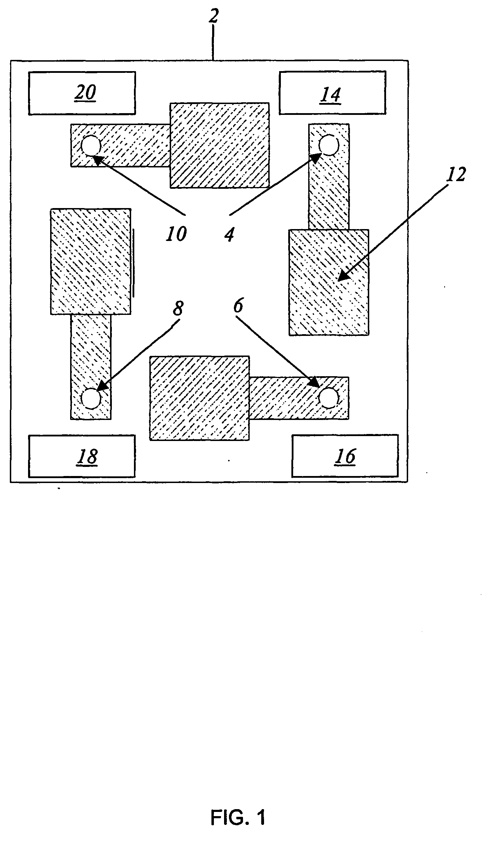

In the following nonlimiting example of this embodiment, FIG. 1 shows a vertical cavity surface emitting laser (VCSEL) structure 2 with a plurality of emission apertures 4, 6, 8, and 10. Emission apertures 4 can be fabricated by using either proton isolation or dielectric oxide techniques to provide both carrier and optical confinement. Emission aperture 4, for instance, is functionally integrated (although they do not have to be integrated) with a bond pad 12 and is electrically coupled to an element 14. Elements 16, 18, and 20 are also shown and can be identical or not identical to each other and to element 14. Upon powering elements, emission apertures emit light signals (not shown) perpendicular to VCSEL structure 2, making them especially amenable to the fabrication of both one and two-dimensional arrays. While the example shown in FIG. 1 (and other figures) comprises a 2×2 array of emission apertures, it should be noted that the fabrication of M×N arrays is also feasible and that the 2x2 array is only provided to simplify explanation.

One of the principle advantages to array fabrication using VCSEL structures 2 is that all of the dimensions in the array can be fabricated using photolithography, thereby incorporating high dimensional tolerances in the placement of the emission apertures. As a result, the high dimensional tolerance produces a precisely defined array of light signals emitted and enables the fabrication of any one or two-dimensional array desired, such as the pattern of a cross. The elements can be electrically connected or coupled in virtually any manner desired as well, permitting light signals to be emitted individually or in groups. Light signals can be emitted in single or multiple spatial modes and can vary in terms of divergence angles and/or the diameter of the light signal being emitted and focused. Light signals can also be emitted in single or multiple wavelengths. By using advanced selective epitaxial techniques, light signals of widely separated wavelengths can be fabricated.

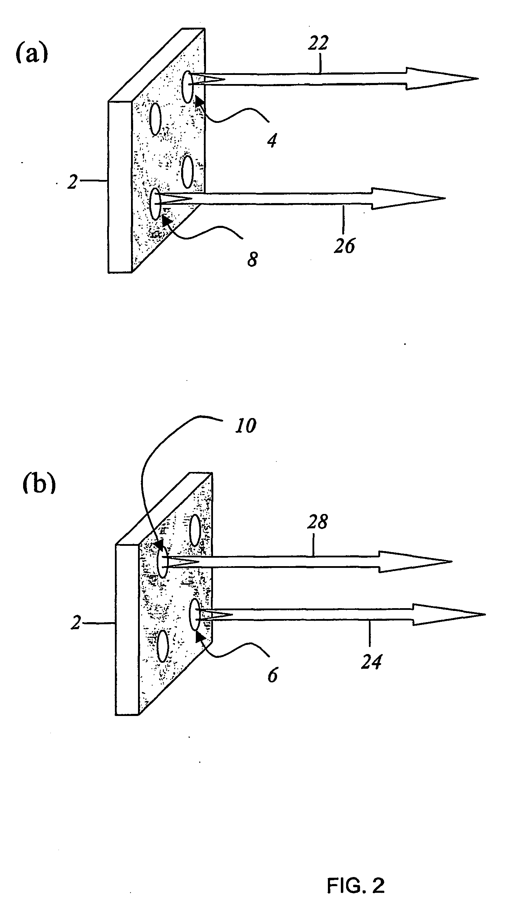

FIG. 2 illustrates the illumination of different patterns of light signals by the same VCSEL structure 2. In FIG. 2(a), emission aperture 4 emits light signal 22 while aperture 8 emits light signal 26. In FIG. 2(b), emission aperture 6 emits light signal 24 while aperture 10 emits light signal 28. Similarly, any other one, or group of two, three, or four, light signals could be emitted from a 2×2 array. It should be reiterated that any array including any number of emission apertures could be constructed, permitting the emission of a variety of light signal patterns.

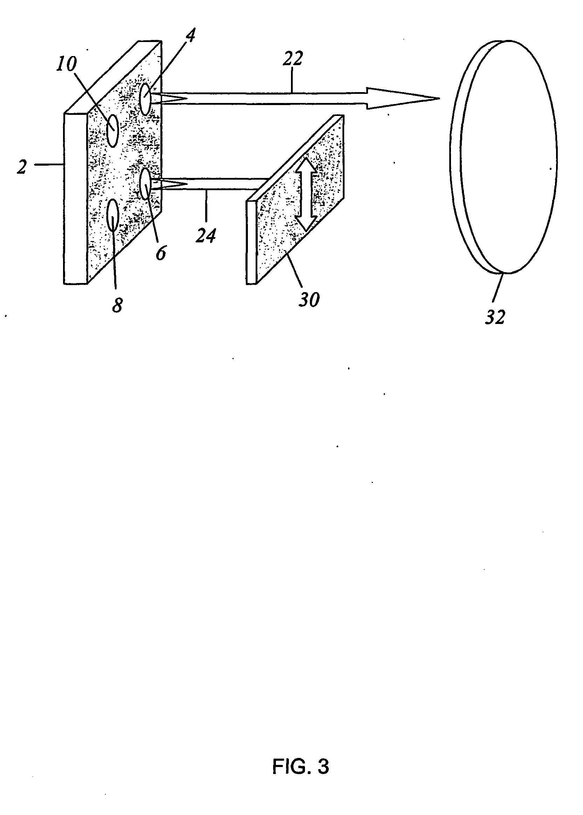

The first preferred embodiment is a reconfigurable static structured light source, which is depicted in FIG. 3. The diagram shows VCSEL structure 2 simultaneously emitting light signals 22 and 24 into an environment from emission apertures 4 and 6, respectively. While different light signals (or sets of signals) of the array can be emitted at different times, the timing of the changes is not directly relevant to the intended function. A target 30 is positioned in the environment between VCSEL structure 2 and a detector 32, which could be any of various types, such as a photodiode. A photodiode detector could either include an individual photodiode, multiple photodiodes individually packaged, or an array of photodiodes on a single structure in a single package.

As target 30 moves upward, the particular light signal received by detector 32 changes from full on (no obstruction), to half on (signal 24 blocked but not signal 22), and finally to full off (both signals 24 and 22 blocked). This happens in an essentially digital, or stepwise, fashion. A single illuminator in a similar geometry would provide only a very gradual change in detector illumination, requiring a more sophisticated algorithm to determine position at the midpoint. However, with this same VCSEL array, the identical function can be provided for target 30 moving orthogonally to that shown in FIG. 3, simply by emitting signals from apertures 6 and 8 instead of 4 and 6, for example. For detection of a diagonally-moving target, signals from apertures 4 and 8 or 6 and 10 would be emitted. Thus, multiple motions could be sensed with a single detector 32 by sequentially emitting light signals from different apertures.

An extension of the concept requires larger element counts. Consider a VCSEL array with 5x2 elements, for example. If a stationary target with a corrugated edge is interposed between the VCSEL array and a detector, the corrugations will block some light signals and not others. By cycling through several fixed patterns of "lit" and "unlit" VCSELs, the detector signal can be interpreted as a map of the corrugated edge. In this way the corrugated obstruction acts as a key and the optical assembly including the VCSEL array and the detector acts as a lock. Electronics known to those skilled in the art can produce locks that recognize only one or several keys. Any emission patterns that correspond in a certain way to the pattern on the target would result in a positive identification, or recognition, by the detector.

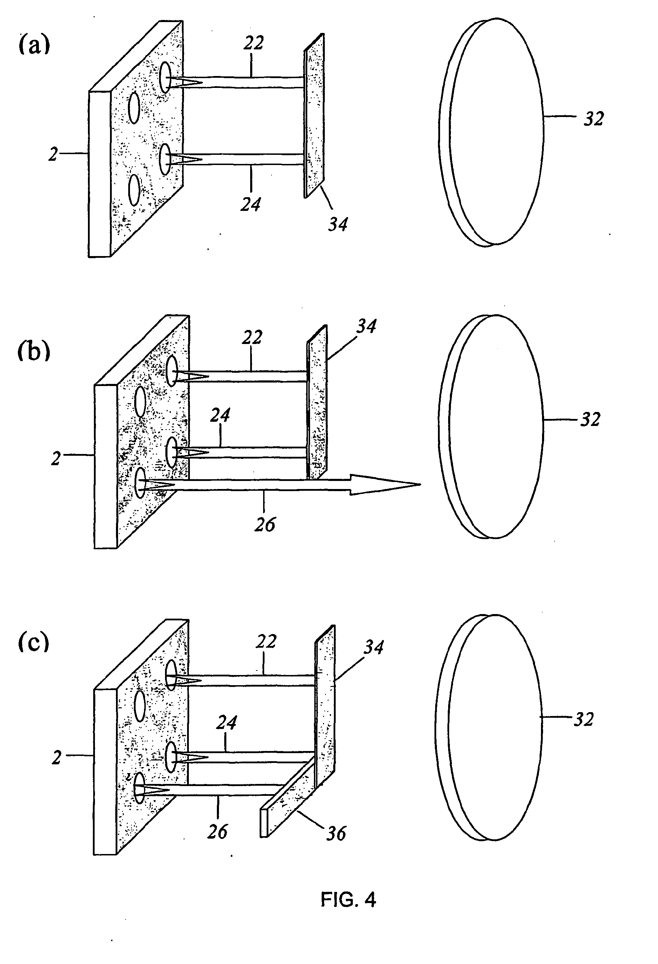

FIG. 4 illustrates VCSEL structure 2 cycling through different emission patterns of light signals to determine a map of a target. In FIG. 4(a), a vertical bar-shaped target 34 blocks light signals 22 and 24 from reaching detector 32. When a different pattern of signals is emitted (22, 24, and 26) as in (b), signal 26 reaches detector 32 while signals 22 and 24 remain blocked. Detector 32, therefore, recognizes that target 34 has no horizontal piece spatially correlated to light signal 26. In the presence of a right angle-shaped target 36 as in FIG. 4(c), however, the same right angle-shaped pattern as emitted in FIG. 4(b) is blocked. Neither signal 22, 24, nor 26 reaches detector 32, indicating to detector 32 that target 36 (unlike target 34) does have a horizontal piece spatially correlated to light signal 26.

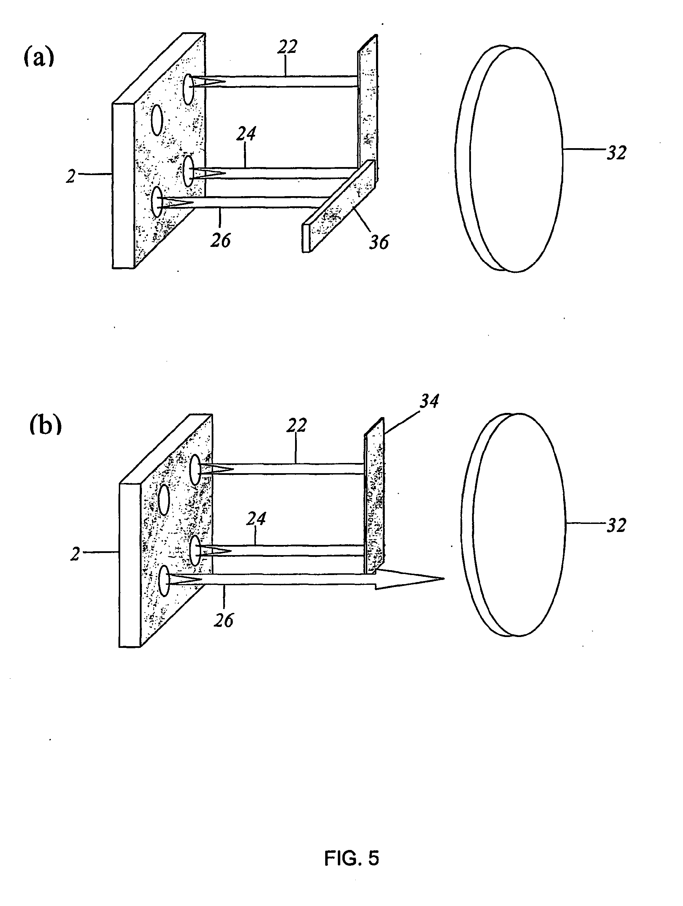

FIG. 5 illustrates how a specified target can be recognized while others are not. In this example, VCSEL structure 2 emits the same pattern of light signals in FIGS. 5(a) and (b), though the shape of the target differs. In FIG. 5(a), target 36 blocks all emitted signals 22, 24, and 26 from reaching detector 32. In FIG. 5(b), target 34 blocks only light signals 22 and 24, permitting signal 26 to reach detector 32. With the same pattern of light signals emitted, therefore, different signals will reach detector 32 depending on the shape of the particular target present in the environment. This difference subsequently could allow for recognition of a specified target when an exact "match" is made by the system.

The aforementioned corrugated opaque obstruction is only one example of possible key configurations. Among other possiblities are arrays of holes or exposed areas on film.

In addition to using a plurality of light sources, the present invention could perform object recognition tasks faster than many current systems by using a camera as a detector. The camera could be one of various types, including a charge-coupled device (CCD) or CMOS camera. When the camera display of a typical current system is divided into separate areas, complex image processing algorithms are often required to measure the partially blocked areas from the uniform light source. When the display of the present invention is divided into separate areas, each area has its own independent illumination differing spatially from adjacent illuminations due to the plurality of light signals emitted. As a result, all of the signals can be detected simultaneously and be quickly summed together to provide the desired information.

A target could also be detected by the composition of its surface. The absorptive characteristics of the surface can absorb and/or reflect light signals differently based on the wavelength of the signals. Emitting light signals of different wavelengths, which might be accomplished by fabricating VCSEL structure 2 with different elements, could, therefore, also indicate the absorptive characteristics of the material. In either situation, detecting a target based on its characteristics, or detecting the characteristics of a target, a microprocessor could determine characteristics by comparing the light signals received by a detector with the signals emitted by a VCSEL structure. If the difference in wavelength among the signals emitted were large enough to detect by a detector, a plurality of detectors (such as detector 32 depicted in the figures) could be used to detect signals within different ranges of wavelength, which might provide more detailed information about the absorptive characteristics of most targets. Features can be compared to characteristics stored in memory..

In order to detect targets of various sizes, optics could be added. A lens or array of lenses can be positioned between VCSEL structure 2 and target 30 such that the lens reproduces the pattern of emitted light signals into a larger or smaller pattern in the image plane. The emission pattern of the image would be identical in shape to the original pattern emitted but different in size. A microprocessor could then correlate the pattern of light signals received by detector 32 in the presence of target 30 with the pattern of signals originally emitted and/or with signals stored in memory.

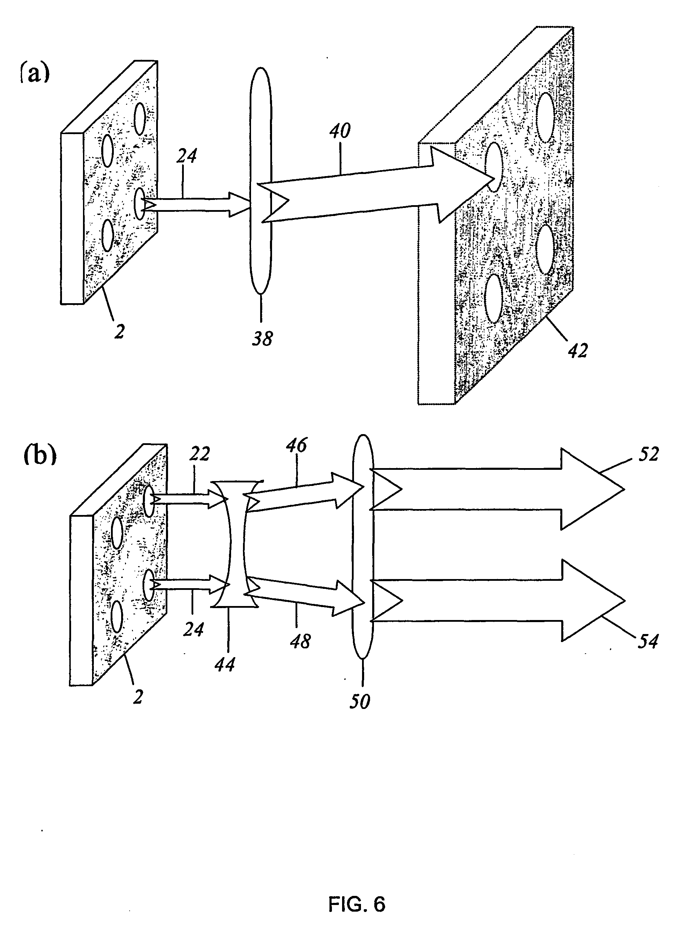

FIG. 6 illustrates two ways in which lenses can be used to alter the size of an array of light signals. In FIG. 6(a), a single lens 38 produces a magnified image 42 of the array emitted by VCSEL structure 2, affording detection of targets larger than the physical array. As light signal 24 enters lens 38, lens 38 magnifies signal 24 into a new light signal 40 having a larger diameter. In this particular configuration, magnified image 42 would be inverted compared to the array originally emitted by VCSEL structure 2. Two lenses could also be used in a collimator-telescope configuration (not shown). In FIG. 6(b) a compound lens system produces an expanded version of the array emitted by VCSEL structure 2. As light signals 22 and 24 enter lens 44, lens 44 manipulates (either through convergence or divergence) signals 22 and 24, creating new light signals 46 and 48, respectively. Signals 46 and 48 then enter a lens 50, which collimates signals 46 and 48 into new signals 52 and 54, respectively. These resulting signals 52 and 54 have a larger diameter than light signals 22 and 24 originally emitted.

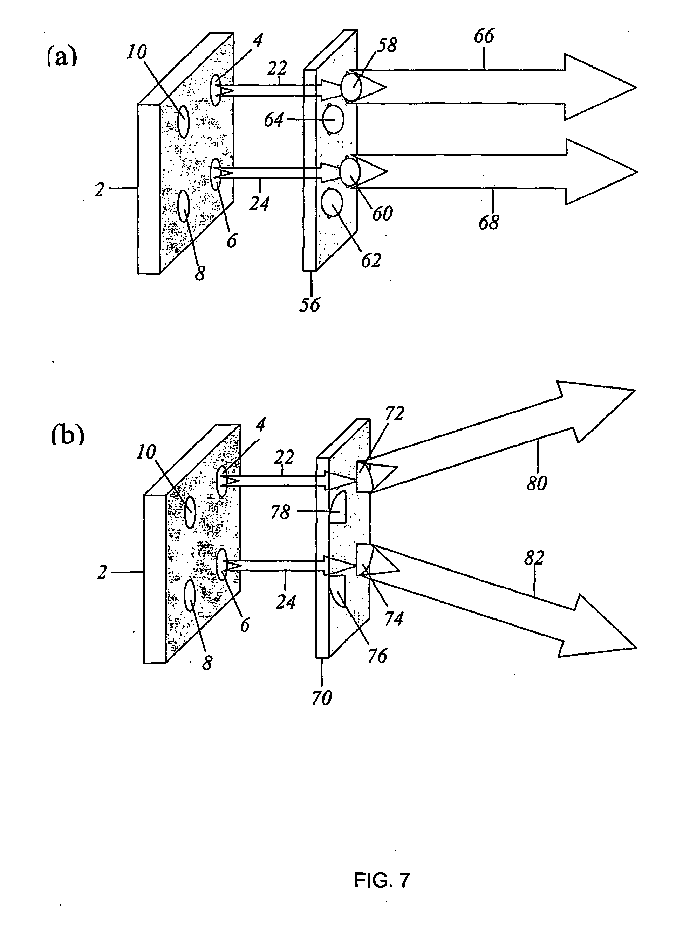

FIG. 7 illustrates alternative configurations of arrays of lenses that can be used to alter the array of light signals emitted by VCSEL structure 2. In FIG. 7(a) lens array 56 contains lenses 58, 60, 62, and 64 that correspond spatially to emission apertures 4, 6, 8, and 10, respectively. Lens 58 expands the diameter of entering light signal 22 into new light signal 66. Similarly, lens 60 expands the diameter of signal 24 into new signal 68. While the lenses of lens array 56 alter the size of the light signals, they do not alter the center spacing of the signals and thus conserve the spatial characteristics of the array emitted by VCSEL structure 2.

In FIG. 7(b) lens array 70 contains lenses 72, 74, 76, and 78 that correspond spatially to emission apertures 4, 6, 8, and 10, respectively. Lens 72 expands the diameter and changes the direction of entering light signal 22 into new light signal 80. Similarly, lens 74 expands the diameter and changes the direction of signal 24 into new signal 82. In this particular example, lens array 70 diverges entering light signals, though other configurations of divergence or convergence could be used as well.

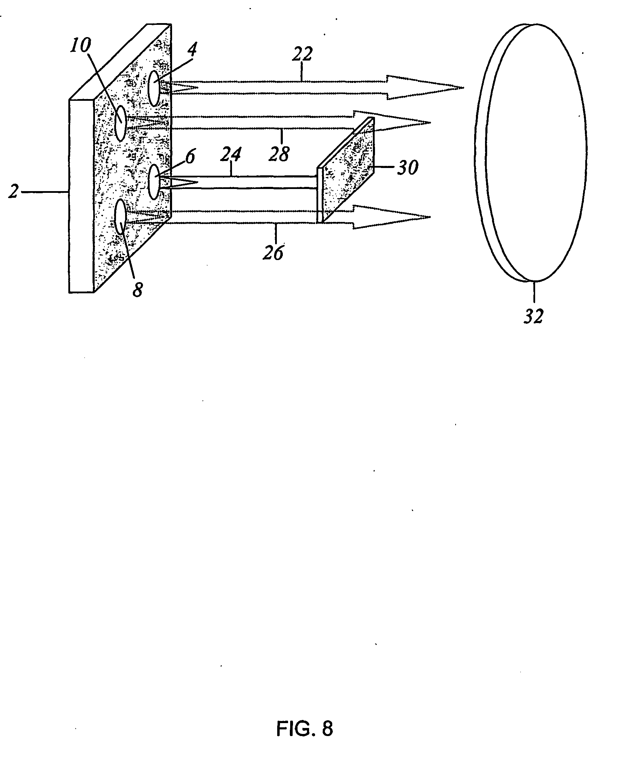

In the second preferred embodiment, the timing of illuminating the individual elements is an integral part of the sensing process. The elements are serially illuminated in a sequence whose temporal characteristics are interpreted. In FIG. 8, VCSEL structure 2 is shown sequentially emitting light signals from emission apertures 4, 6, 8, and 10 in the order 4, 6, 8, 10, 4, 6, 8, 10, etc. Corresponding light signals 22, 24, 26, and 28 are, therefore, emitted from the emission apertures. In this example, three light signals have already been emitted (26, 28, 22), illustrated by the dotted lines, and one is currently lit (24). Light signal 26 has been emitted and has reached detector 32 unobstructed by target 30. Signal 28 was then emitted and similarly reached detector 32 obstructed. Light signal 22 reached target 30 next, also unobstructed. Currently, signal 24 is lit and has been blocked by target 30 before reaching detector 32. If the output of a single detector 32 disposed to receive all of the light signals in the array is monitored over time, the angular (and to a partial extent, the spatial) location of target 30 can be determined by the absence of a signal at the time the particular signal(s) are blocked. The array need not be circular, as linear arrays or multiple concentric rings could be used to map the shape of target 30 by interpreting the time-sequence of the output of detector 32.

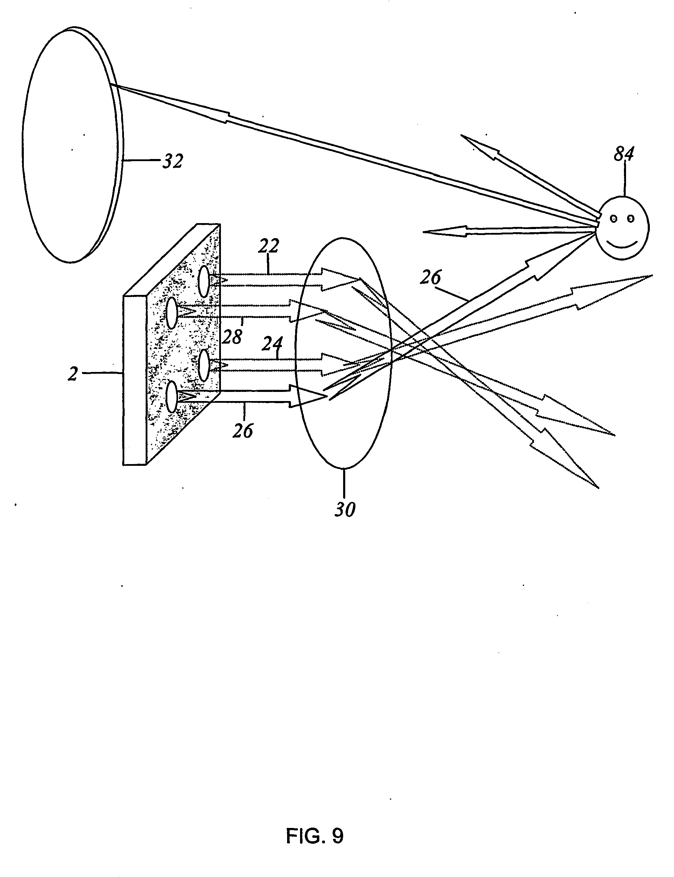

If optics are added, as depicted in FIG. 9, light signals can be steered into different angles. Light signals are shown passing through lens 30, positioned between VCSEL structure 2 and target 84. Lens 30 then redirects the light signals to different places in the environment, allowing a single detector 32 to sense targets 84 at widely separated locations. With only ten VCSEL elements, approximately, a full half-plane of 2π steradians could be monitored.

In this example, light signals 28, 22, and then 24 have already been sequentially emitted, as denoted by the dotted lines, and light signal 26 is currently lit. After being redirected by lens 30, light signal 26 travels until it intercepts target 84. Light signal 26 then reflects off of target 84 and reaches detector 32. It should be noted that target 84 happened to be positioned in the environment such that it lay in the path of light signal 26, rather than light signal 26 specifically seeking target 84. If target 84 were moved, it would lie in the path of a different light signal.

With linear arrays, position of a target along an axis can be detected. One example of a "circular" array application could use a single lens above VCSEL structure 2. This lens could skew each signal into a different angle as the individual elements are sequentially illuminated. A light signal can, therefore, be directed to different areas in an environment at different times by simply illuminating different elements at different times. Measuring the temporal output of a detector disposed to collect reflected light signals can provide information on the presence of a target and of its location. Even if location information is not necessary, the effective scanning of a light signal without moving parts can provide for a purely electrical function rather than a mechanical function. This feature allows for operation at a much lower input power, which could be important in battery-powered applications where energy conservation is often critical.

A lens or array of lenses can be positioned near VCSEL structure 2 such that a lens collimates each light signal passing through. Whereas current optical systems are generally known to collimate a single light signal into one parallel group of signals, the present invention can collimate each of a plurality of signals into corresponding parallel groups. Since each light signal passes through a lens at a different angle, due to the different location of each emission aperture on VCSEL structure 2, each group of collimated signals exits a lens at a different angle.

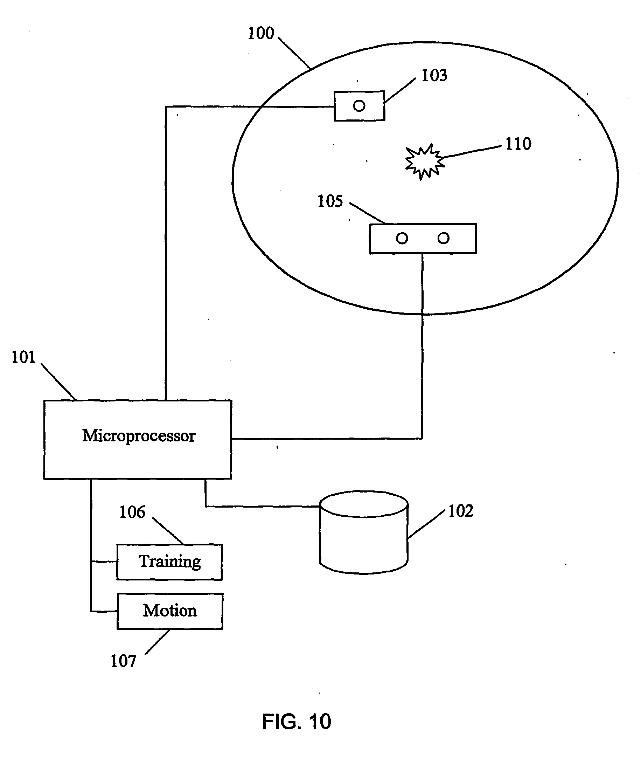

An optical sensing system for detecting target motion within a known environment is now described. Referring to FIG. 10, a system capable of detecting target motion can include a vertical cavity surface emitting laser structure 105 with at least two emission apertures that could be defined by known processing methods such as photolithography. A laser signal can be emitted into an environment 100 from each of the emission apertures. The system can also include at least one detector 103 that is operationally responsive to the vertical cavity surface emitting laser structure 105. The system can include a microprocessor 101 that is operationally coupled to the detector(s) 103, VCSEL 105 and a memory 102, such as a database, for storing target data and a training module for allowing the system to be trained to recognize targets 110. The trainable laser optical sensing system can make positive identification of object once trained where microprocessor 101 references a database 102 and/or using neural network capabilities to correlate the detected pattern of light signals from the target 110 with stored patterns of signals from known targets. A motion analysis module 107 enables the microprocessor 101 to determine target mobility characteristics (e.g., velocity, direction). The motion analysis module 107 determines motion characteristics of an objected detected within said environment where the laser source 105 emits at least two laser signals into an environment occupied by a target 110, at least one detector 103 detects changes in said at least two laser signals after signals pass through environment 100 and interfere with a detected object 110, and microprocessor 101 determines target characteristics based on signals received by detector 103 and input from said motion analysis module 107. The laser optical sensing system can also includes a training module 106. The training module would include software used by the microprocessor 101 during training and detection operations.

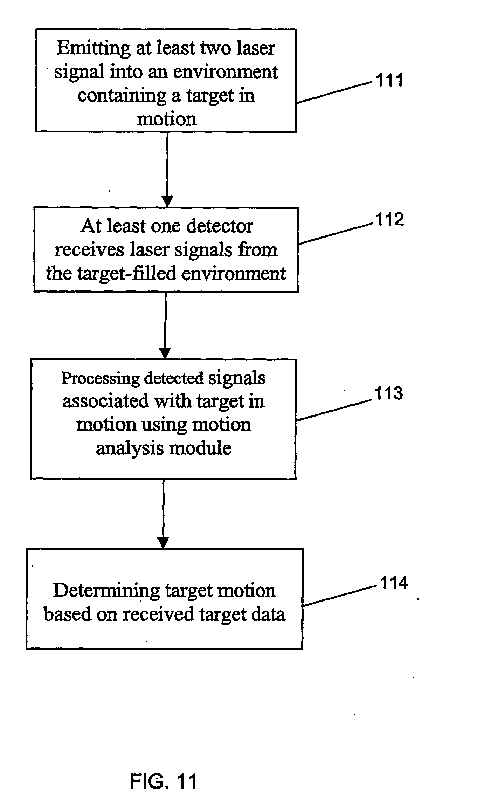

Referring to FIG. 11, during operation the vertical cavity surface emitting laser structure can emit at least two laser signals into the environment 111, which may be occupied by a target in motion. At least one detector detects the presence of (receives) the laser signals 112 once they have passed through the target-filled environment and are blocked by at least one target. The microprocessor processes 113 received signals associated with target motion using a motion analysis algorithm provided to the microprocessor by a motion analysis module. The microprocessor then determines target motion 114 based on analysis of received target data. Optics can also be added to the system, such that laser signals pass through at least one lens or reflect off of a mirror or mirrors after exiting the emission apertures.

The system can be trained or calibrated by emitting at least one laser signal at a time into an environment containing a known target (known target in motion characteristics) using a vertical cavity surface emitting laser structure. Motion characteristics of the known target can be referred to as a test target. The test target interferes with laser signals. Signal reflected off of said test target are received by at least one detector. The laser signals, representing target characteristics, are processed by the microprocessor and used to calibrate the motion analysis module by storing results in memory.

Target motion and characteristic information can be determined by placing a single detector 103 in the room, positioned near to or far from VCSEL structure 105, though a plurality of detectors could be used as well. A lens or array of lenses (as shown in FIG. 9) could also be placed near detector 103 to effectively expand the area from which it can receive light signals. As detector(s) receives light signals reflected off of the target 110 and/or the walls or other objects in the room (environment 100), the microprocessor 101 processes the signals to provide the desired information.

It should be noted that nearly all of the aforementioned applications, as well as any others, could potentially be addressed using either transmissive or reflective systems.

## Claims

1. An optical sensing system for detecting target motion within a known environment, which comprises:
a laser source (105) adapted for operation by illumination through at least two emission apertures (4, 6, 8 10) of an at least 2 aperture-by-at least 2 aperture array, wherein said illumination through said at least two emission apertures (4, 6, 8 10) thereby creates at least two laser signals;
at least one detector (103) operationally responsive to the laser signals;
a microprocessor (101) operationally coupled to said at least one detector (103); and
a motion analysis module (107) for determining motion characteristics of a target (110) detected within said environment (100), wherein said laser source (105) emits said at least two laser signals into an environment (100) occupied by a target (110), said at least one detector (103) detects changes in said at least two laser signals after said signals pass through said environment (100) and interfere with a detected target (110), and said microprocessor (101) determines target characteristics based on said signals received by said detector (103) and input from said motion analysis module (107).

2. The system of claim 1, wherein said laser source (105) includes a vertical cavity surface emitting laser.

3. The system of claim 1 or claim 2, further comprising a memory (102) for storing characteristics of a monitored environment, wherein said microprocessor (101) determines target characteristics based also on reference to said memory (102).

4. The system of any of the preceding claims, wherein said laser source (105) emits at least said two laser signals statically.

5. The system of any of claims 1 to 3, wherein said laser source (105) emits at least one laser signal at a time serially.

6. The system of any of the preceding claims, wherein said detector (103) includes a photodiode.

7. A method for detecting the motion of an object detected within a monitored environment, including the steps of:
emitting (111) light into a monitored environment from a laser source adapted for operation by illumination of the light through at least two emission apertures (4, 6, 8 10) of an at least 2 aperture-by-at least 2 aperture array, wherein said illumination through said at least two emission apertures (4, 6, 8 10) thereby creates at least two laser signals and wherein said at least two laser signals are emitted into the monitored environment from a vertical cavity surface emitting laser structure statically, and wherein at least one target (110) entering into the environment can block at least one of said laser signals;
transmissively receiving (112) any of said laser signals not blocked by said target; and
determining target motion (113) by comparing characteristics of said laser signals emitted by said vertical cavity surface emitting laser structure with characteristics of received laser signals.

8. The method of claim 7, wherein a microprocessor (101) is used to determine the size or shape of said target (110) by determining which said laser signals are received by a detector (103) after different arrays of said laser signals are emitted by a vertical cavity surface emitting laser structure (105).

9. The method of claim 7, wherein a microprocessor (101) determines the presence or absence of a specific said target by comparing the array of said laser signals emitted by said vertical cavity surface emitting laser structure (105) with the array of said laser signals received by said detector (103).

10. The method of claim 7, wherein a microprocessor (101) detects motion of said target (110) by using a detector (103) to detect changes in the array of laser signals transmitted by a verticle cavity surface emitting laser structure (105) and blocked by said target (110).

11. The method of claim 7, wherein a microprocessor (101) detects motion of a target (110) by detecting changes in a specific array of laser signals that are blocked by said target (110).

## Patentansprüche

1. Optisches Erfassungssystem zum Detektieren einer Zielbewegung innerhalb einer bekannten Umgebung, das folgendes umfaßt:
eine Laserquelle (105), die ausgelegt ist für den Betrieb über Abstrahlung durch mindestens zwei Emissionsöffnungen (4, 6, 8, 10) eines mindestens zwei Öffnungen mal mindestens zwei Öffnungen großen Arrays, wobei die Abstrahlung durch die mindestens zwei Emissionsöffnungen (4, 6, 8, 10) **dadurch** mindestens zwei Lasersignale erzeugt;
mindestens einen Detektor (103), der im Betrieb auf die Lasersignale reagiert;
einen Mikroprozessor (101), der im Betrieb an den mindestens einen Detektor (103) gekoppelt ist; und
ein Bewegungsanalysemodul (107) zum Bestimmen von Bewegungscharakteristiken eines innerhalb der Umgebung (100) detektierten Ziels (110), wobei die Laserquelle (105) die mindestens zwei Lasersignale in eine von einem Ziel (110) belegte Umgebung (100) emittiert, wobei der mindestens eine Detektor (103) Änderungen bei den mindestens zwei Lasersignalen detektiert, nachdem die Signale durch die Umgebung (100) hindurchtreten und mit einem detektierten Ziel (110) interferieren, und der Mikroprozessor (101) Zielcharakteristiken auf der Basis der vom Detektor (103) empfangenen und vom Bewegungsanalysemodul (107) eingegebenen Signale bestimmt.

2. System nach Anspruch 1, wobei die Laserquelle (105) einen oberflächenemittierenden Laser (VCSEL - vertical cavity surface emitting laser) enthält.

3. System nach Anspruch 1 oder 2, weiter mit einem Speicher (102) zum Speichern von Charakteristiken einer überwachten Umgebung, wobei der Mikroprozessor (101) Zielcharakteristiken auch auf der Basis einer Referenz auf den Speicher (102) bestimmt.

4. System nach einem der vorhergehenden Ansprüche, wobei die Laserquelle (105) mindestens die beiden Lasersignale statisch emittiert.

5. System nach einem der Ansprüche 1 bis 3, wobei die Laserquelle (105) jeweils mindestens ein Lasersignal seriell emittiert.

6. System nach einem der vorhergehenden Ansprüche, wobei der Detektor (103) eine Fotodiode enthält.

7. Verfahren zum Detektieren der Bewegung eines innerhalb einer überwachten Umgebung detektierten Objekts, mit den folgenden Schritten:
Emittieren (111) von Licht in eine überwachte Umgebung von einer Laserquelle, die ausgelegt ist für den Betrieb durch Abstrahlung des Lichts durch mindestens zwei Emissionsöffnungen (4, 6, 8, 10) eines mindestens zwei Öffnungen mal mindestens zwei Öffnungen großen Arrays, wobei die Abstrahlung durch die mindestens zwei Emissionsöffnungen (4, 6, 8, 10) **dadurch** mindestens zwei Lasersignale erzeugt und wobei die mindestens zwei Lasersignale von einer VCSEL-Struktur statisch in die überwachte Umgebung emittiert werden, und wobei mindestens ein in die Umgebung eintretendes Ziel (110) mindestens eines der Lasersignale blockieren kann;
transmittierendes Empfangen (112) irgendeines der nicht vom Ziel blockierten Lasersignale und
Bestimmen einer Zielbewegung (113) durch Vergleichen von Charakteristiken der von der VCSEL-Struktur emittierten Lasersignale mit Charakteristiken empfangener Lasersignale.

8. Verfahren nach Anspruch 7, wobei mit einem Mikroprozessor (101) die Größe und Gestalt des Ziels (110) bestimmt wird durch Bestimmen, welche Lasersignale von einem Detektor (103) empfangen werden, nachdem verschiedene Arrays der Lasersignale von einer VCSEL-Struktur (105) emittiert werden.

9. Verfahren nach Anspruch 7, wobei ein Mikroprozessor (101) die Anwesenheit oder Abwesenheit eines spezifischen Ziels bestimmt durch Vergleichen des Arrays der von der VCSEL-Struktur (105) emittierten Lasersignale mit dem von dem Detektor (103) empfangenen Array der Lasersignale.

10. Verfahren nach Anspruch 7, wobei ein Mikroprozessor (101) eine Bewegung des Ziels (110) detektiert unter Verwendung eines Detektors (103) zum Detektieren von Änderungen in dem von einer VCSEL-Struktur (105) weitergeleiteten durchgelassenen und von dem Ziel (110) blockierten Array von Lasersignalen.

11. Verfahren nach Anspruch 7, wobei ein Mikroprozessor (101) eine Bewegung eines Ziels (110) detektiert durch Detektieren von Änderungen bei einem spezifischen Array von Lasersignalen, die von dem Ziel (110) blockiert werden.

## Revendications

1. Système de détection optique pour détecter le mouvement de cibles dans un milieu connu, comprenant :
une source laser (105) conçue pour fonctionner par illumination à travers au moins deux ouvertures d'émission (4, 6, 8, 10) d'un réseau d'au moins 2 ouvertures sur au moins 2 ouvertures, ladite illumination à travers lesdites au moins deux ouvertures d'émission (4, 6, 8, 10) créant ainsi au moins deux signaux laser ;
au moins un détecteur (103) réagissant de façon fonctionnelle aux signaux laser ;
un microprocesseur (101) couplé de façon fonctionnelle audit au moins un détecteur (103) ; et
un module d'analyse du mouvement (107) pour déterminer des caractéristiques de mouvement d'une cible (110) détectée dans ledit milieu (100),
dans lequel ladite source laser (105) émet lesdits au moins deux signaux laser dans un environnement (100) occupé par une cible (110), ledit au moins un détecteur (103) détecte des variations desdits au moins deux signaux laser après le passage desdits signaux à travers ledit milieu (100) et leur interférence avec une cible détectée (110), et ledit microprocesseur (101) détermine des caractéristiques de cibles sur la base desdits signaux reçus par ledit détecteur (103) et d'une entrée provenant dudit module d'analyse du mouvement (107).

2. Système selon la revendication 1, dans lequel ladite source laser (105) est un laser à cavité verticale et à émission par la surface.

3. Système selon la revendication 1 ou la revendication 2, comprenant en outre une mémoire (102) pour stocker des caractéristiques d'un milieu surveillé, dans lequel ledit microprocesseur (101) détermine des caractéristiques de cibles en se référant également à ladite mémoire (102).

4. Système selon l'une quelconque des revendications précédentes, dans lequel ladite source laser (105) émet lesdits au moins deux signaux laser de façon statique.

5. Système selon les revendications 1 à 3, dans lequel ladite source laser (105) émet au moins un signal laser à la fois en série.

6. Système selon l'une quelconque des revendications précédentes, dans lequel ledit détecteur (103) est une photodiode.

7. Procédé de détection du mouvement d'un objet détecté dans un milieu surveillé, comportant les étapes consistant à :
émettre (111) de la lumière dans un milieu surveillé à partir d'une source laser conçue pour fonctionner par illumination de la lumière à travers au moins deux ouvertures d'émission (4, 6, 8, 10) d'un réseau d'au moins 2 ouvertures sur au moins 2 ouvertures, ladite illumination à travers lesdites au moins deux ouvertures d'émission (4, 6, 8, 10) créant ainsi au moins deux signaux laser et lesdits au moins deux signaux laser étant émis dans le milieu surveillé de façon statique à partir d'une structure laser à cavité verticale et à émission par la surface, et au moins une cible (110) pénétrant dans le milieu pouvant bloquer au moins un desdits signaux laser ;
recevoir (112) par transmission l'un quelconque desdits signaux laser non bloqué par ladite cible ; et
déterminer (113) le mouvement de la cible en comparant des caractéristiques desdits signaux laser émis par ladite structure laser à cavité verticale et à émission par la surface à des caractéristiques de signaux laser reçus.

8. Procédé selon la revendication 7, dans lequel un microprocesseur (101) est utilisé pour déterminer la taille ou la forme de ladite cible (110) en déterminant ceux desdits signaux laser qui sont reçus par un détecteur (103) après l'émission de différents groupes desdits signaux laser par une structure laser à cavité verticale et à émission par la surface (105).

9. Procédé selon la revendication 7, dans lequel un microprocesseur (101) détermine la présence ou l'absence d'une dite cible particulière en comparant le groupe desdits signaux laser émis par ladite structure laser à cavité verticale et à émission par la surface (105) au groupe desdits signaux laser reçus par ledit détecteur (103).

10. Procédé selon la revendication 7, dans lequel un microprocesseur (101) détecte le mouvement de ladite cible (110) en utilisant un détecteur (103) pour détecter des variations du groupe de signaux laser transmis par une structure laser à cavité verticale et à émission par la surface (105) et bloqués par ladite cible (110).

11. Procédé selon la revendication 7, dans lequel un microprocesseur (101) détecte le mouvement d'une cible (110) en détectant des variations d'un groupe particulier de signaux laser bloqués par ladite cible (110).
